(19) **Europäisches Patentamt / European Patent Office / Office européen des brevets**

(11) **EP 4 502 851 A1**

(12) **EUROPEAN PATENT APPLICATION**

(43) Date of publication:
05.02.2025 Bulletin 2025/06

(21) Application number: 24192108.9

(22) Date of filing: 31.07.2024

(51) International Patent Classification (IPC):
$G06F\ 30/10$ (2020.01)   $G06F\ 30/18$ (2020.01)
$G06F\ 30/20$ (2020.01)   $G06F\ 30/23$ (2020.01)

(52) Cooperative Patent Classification (CPC):
G06F 30/23; G06F 30/10; G06F 30/18; G06F 30/20;
G06F 2113/16

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.07.2023 US 202318362133

(71) Applicant: Dassault Systemes SolidWorks
Corporation
Waltham, MA 02451-1223 (US)

(72) Inventors:
• Yu, Bowen
  Waltham, 02451 (US)
• Huang, Yunching
  Waltham, 02451 (US)
• Stiles, Jody
  Northborough, 01532 (US)

(74) Representative: Bandpay & Greuter
11 rue Christophe Colomb
75008 Paris (FR)

(54) **SYSTEM AND METHOD FOR COLLISION AVOIDANCE WIRING THROUGH MODELED ASSEMBLIES**

(57)   An efficient wire route is determined through an assembly avoiding collisions with a plurality of electrical-mechanical assembly components. A first wire route termination location and a second wire route termination location in a received three dimensional (3D) model of the assembly. The received 3D model is converted into a volume model distinguishing between occupied and available space. A wire route is found from the first wire route termination location through the assembly available space to the second wire route termination location, and an image of the wire route in the model of the assembly is displayed.

Determine a bounding box for a 3D modeled assembly with a plurality of components.
810

Partition the assembly into a plurality of voxels ($n_1$, $n_2$, $n_3$) in x,y,z directions
820

Determine a triangle mesh for each of the plurality of components
830

For each mesh triangle, locate extreme points $P_{min}$ and $P_{max}$
840

Determine a mesh bounding box containing $P_{min}$ and $P_{max}$ having two voxel indexes ($i_{min}$,$j_{min}$,$k_{min}$) and ($i_{max}$,$j_{max}$,$k_{max}$) for each mesh triangle
850

Find all the voxels intersecting with the mesh bounding box for the indexes $i_{min} \le I \le i_{\_max}$, $j_{min} \le j \le j_{max}$, $k_{min} \le k \le k_{\_max}$
860

Calculate a voxel-to-triangle distance from the center of each intersecting voxel (i,j,k) to each triangle
870

Mark voxels having a voxel-to-triangle distance smaller than a predetermined clearance value as boundary voxels
880

800

**FIG. 8**

**Description**

FIELD OF THE INVENTION

The present invention relates to computer assisted design and manufacturing, and more particularly, is related to determining a wiring path through an assembly for manufacture.

BACKGROUND OF THE INVENTION

Routing wiring through assemblies with a combination of electrical and mechanical components may be challenging. In general, it is desirable to minimize the point-to-point distance between wiring connections, yet the geometry of an assembly may make it difficult to facilitate such connections while avoiding collisions with electro-mechanical components of the assembly. Wires begin at a first connection point and end at a second connection point, typically on electrical devices such as batteries, motors, and control boards, passing through various points or regions in the assembly. Finding a good/clear path through the assembly from the first connection point on a first component to the second connection point on a second component can be a time consuming and error prone process.

Computer Assisted Drafting tools such as SolidWorks Electrical rely on pre-defined paths for the wires to follow. Those products with automatic routing capabilities, such as SolidWorks Routing, do not consider collisions with the geometry of other components during their auto-routing processes, and as such the user must manually modify the result to avoid the collision. Therefore, there is a need in the industry to address the abovementioned shortcomings.

SUMMARY OF THE INVENTION

Embodiments of the present invention provide collision avoidance for wiring through modeled assemblies. Briefly described, the present invention is directed to determining an efficient wire route through an assembly avoiding collisions with a plurality of electrical-mechanical assembly components. A first wire route termination location and a second wire route termination location in a received three dimensional (3D) model of the assembly. The received 3D model is converted into a volume model distinguishing between occupied and available space. A wire route is found from the first wire route termination location through the assembly available space to the second wire route termination location, and an image of the wire route in the model of the assembly is displayed.

Other systems, methods and features of the present invention will be or become apparent to one having ordinary skill in the art upon examining the following drawings and detailed description. It is intended that all such additional systems, methods, and features be included in this description, be within the scope of the present invention and protected by the accompanying claims.

In an example, it is provided a system for manufacturing an electrical-mechanical assembly comprising an efficient wire route through the assembly to be manufactured avoiding collisions with a plurality of electrical-mechanical assembly components, comprising:

a computer assisted drafting (CAD) system comprising a processor and a memory, the processor configured to execute non-transient instructions received from the memory, that when executed by the processor performs the steps of:

receiving a three dimensional (3D) model of the assembly;
identifying a first wire route termination location and as second wire route termination location;
converting the received 3D model into a volume model distinguishing between occupied and available space;

finding a wire route from the first wire route termination location through the assembly available space to the second wire route termination location; and
displaying an image of the wire route in the model of the assembly; and

an automated manufacturing machine configured to:

receive the 3D wire-routed assembly model from the CAD system; and
manufacture the wire-routed assembly according to the 3D wire-routed assembly model received from the CAD system.

BRIEF DESCRIPTION OF THE DRAWINGS

The accompanying drawings are included to provide a further understanding of the invention, and are incorporated in and constitute a part of this specification. The components in the drawings are not necessarily to scale, emphasis instead being placed upon clearly illustrating the principles of the present invention. The drawings illustrate embodiments of the invention and, together with the description, serve to explain the principles of the invention.

FIG. 1A is a schematic diagram showing a simple bounding box.

FIG. 1B shows the bounding box of FIG. 1A partitioned into 5x1x1 voxels.

FIG. 1C shows the bounding box of FIG. 1A partitioned into 5x2x3 voxels.

FIG. 2A shows a perspective view of a free voxel in proximity of a triangle shaped component.

FIG. 2B shows the free voxel and the component of FIG. 2A from a top view.

FIG. 3A shows a perspective view of a boundary voxel in proximity of a triangle shaped component.

FIG. 3B shows the boundary voxel and the component of FIG. 3A from a top view.

FIG. 4A shows an isometric view of an exemplary battery housing assembly.

FIG. 4B shows a side view of the exemplary battery housing assembly of FIG. 4A.

FIG. 4C shows a top view of the exemplary battery housing assembly of FIG. 4A.

FIG. 5A shows an isometric view of boundary voxels for the exemplary battery housing assembly of FIG. 4A.

FIG. 5B shows a side view of the boundary voxels for the exemplary battery housing assembly of FIG. 5A.

FIG. 5C shows a top view of the boundary voxels for the exemplary battery housing assembly of FIG. 5A

FIG. 6A shows an isometric view of a charging port and battery set inside the exemplary battery housing assembly of FIG. 4A.

FIG. 6B shows a side view of the charging port and battery set inside the exemplary battery housing assembly of FIG. 6A.

FIG. 6C shows a top view of the charging port and battery set inside the exemplary battery housing assembly of FIG. 6A

FIG. 7A shows an isometric section view of free voxels around the charging port and battery set inside the exemplary battery housing assembly of FIG. 6A.

FIG. 7B shows a side section view of free voxels around the charging port and battery set inside the exemplary battery housing assembly of FIG. 7A.

FIG. 8 is a flowchart of an exemplary method embodiment for voxelization of an assembly.

FIG. 9 is a schematic diagram showing an exemplary two dimensional voxel graph.

FIG. 10 is a flowchart of an exemplary first method embodiment for route selection of a voxelized assembly.

FIG. 11 is a flowchart of an exemplary second method embodiment for route selection of a voxelized assembly.

FIG. 12 is a detail of a portion of the flowchart of FIG. 11.

FIG. 13A illustrates a step for producing a first wire path in the battery assembly model of FIGS. 6A-6C.

FIG. 13B illustrates a subsequent step for producing the first wire path of FIG. 13A.

FIG. 13C illustrates a final wire path of FIGS. 13A-13B.

FIG. 13D shows the second embodiment method applied to a second wire.

FIG. 13E shows a top view of the final result of the first wire path and the second wire path 1320 as a result of applying the method of the second embodiment.

FIG. 14 is a schematic diagram illustrating an example of a system for executing functionality of the present invention.

FIG. 15 is a schematic block diagram of an exemplary embodiment of a system for manufacturing an electrical-mechanical assembly with an efficient wire route through the assembly avoiding collisions with a plurality of electrical-mechanical assembly components.

DETAILED DESCRIPTION

The following definitions are useful for interpreting terms applied to features of the embodiments disclosed herein, and are meant only to define elements within the disclosure.
As used within this disclosure, an "assembly" refers to a combination of components that together form a product. An "assembly occupied space" refers to a volume of the assembly with a mechanical or electrical component.
As used within this disclosure, a "voxel" refers to one of a set of uniform three dimensional blocks that may be used to approximate the volume of a three dimensionally modelled object. While the embodiments described herein generally refer to cube shaped voxels, voxels of a different shape may be used in alternative embodiments. Voxels are analogous to three dimensional pixels, and may represent any 3D geometry. An "occupied voxel" refers to a voxel intersecting with an assembly occupied space. An "available voxel" refers to a voxel not intersecting with an assembly occupied space. A "path voxel" refers to an available voxel intersecting with a proposed or determined wiring route within the assembly.
As used within this disclosure, a "mesh" refers to a mathematical fabric of triangles used to model a contiguous surface.
As used within this disclosure, "automatic wire routing" refers to a process that receives a three dimensional (3D) model of an assembly as input, and determines a wiring path between assembly components.
As used within this disclosure "clearance distance" between a first object and a second object indicates the first object and the second object do not intersect at any point.
As used within this disclosure "cost" refers to a measure of distance, and a "cost function" is the length of a path and to be minimized by a path finding process. In particular, a cost function measures the length of a path from between a first point, here a start voxel, to as second point, here an end voxel. The embodiments described below include steps to minimize the cost function to find a path with the shortest length. The distance between two voxels may be measured as distance between their two center points. If there are no obstacles between the start voxel and the end voxel, the shortest path is the line segment between the center points of the voxels. If there is at least one obstacle, a path includes line segments passing the center points of two or more voxels. The cost function may involve a combination of iterative processes for expanding a plurality of paths (ideally all possible paths) beginning at the start voxel and proceeding through some number of intermediate voxels, for example, three intermediate voxels $v_1$, $v_2$, $v_3$. For example, some voxels are checked at an iterative step where the cost function can be computed by a summation of two parts $F(v)=G(v)+H(v)$, where $F(v)$ is the total cost of passing an intermediate voxel v between the start voxel and the end voxel. $G(v)$ is the total cost from the start voxel to voxel v. $G(v)$ is determined at each iterative step, while $H(v)$ is an estimation of cost from voxel v to the end voxel, which may heuristically estimated over the iterations.
As used within this disclosure, a "computer numerical control" (CNC) machine refers to a manufacturing device or system configured to receive a design or model of an assembly, and employs computer software to dictate the operation and/or movement of factory tools and machinery to manufacture the assembly. Examples of a CNC machine may include a one of or a combination of a milling machine, a lathe, a grinder, a mill, a printed circuit board production machine, a CNC router, a pick and place machine, a laser and/or plasma cutter, a wire harness assembler, a wire harness installer, and a 3D printer, among others.
Reference will now be made in detail to embodiments of the present invention, examples of which are illustrated in the accompanying drawings. Wherever possible, the same reference numbers are used in the drawings and the description to refer to the same or like parts.

Exemplary embodiments of the present invention illustrate a method to automatically route a wire through electro-mechanical components of an assembly without colliding with the other components and maintaining the shortest possible wire length.

Electro-mechanical assemblies typically involve electrical and/or optical wiring between assembly components. However previous assembly design tools have not properly addressed wiring routing. The exemplary embodiments create a routing for wires in a 3D modeled assembly. The wires begin and end at different connection points, typically on electrical devices such as batteries, motors, and control boards, and pass through various points or regions in the device. Since wiring is typically a time consuming and/or error prone process, the exemplary embodiments advantageously identify an efficient, clear path through the assembly from a first connection point on a first component to a second connection point on a second component. For example, the wiring path may pass through openings or other control points (for example, clamps) between the first component and the second component. The present embodiments provide a system and method for automatic wire routing.

In general, automatic wire routing in a 3D modeled assembly according to the present embodiments has two major steps. The first step is to voxelize the modeled into small volumes called voxels (typically cubes) and identify available voxels (free voxels) and unavailable voxels (boundary voxels). Here, a free voxel is available for a possible wire route, while an unavailable voxel is not (for example, is otherwise occupied). The second step is to search the available voxels to find shortest wire routes. The 3D modeled assembly may be received by automated manufacturing machinery such as a CNC machine for manufacturing the assembly with the specified wire route.

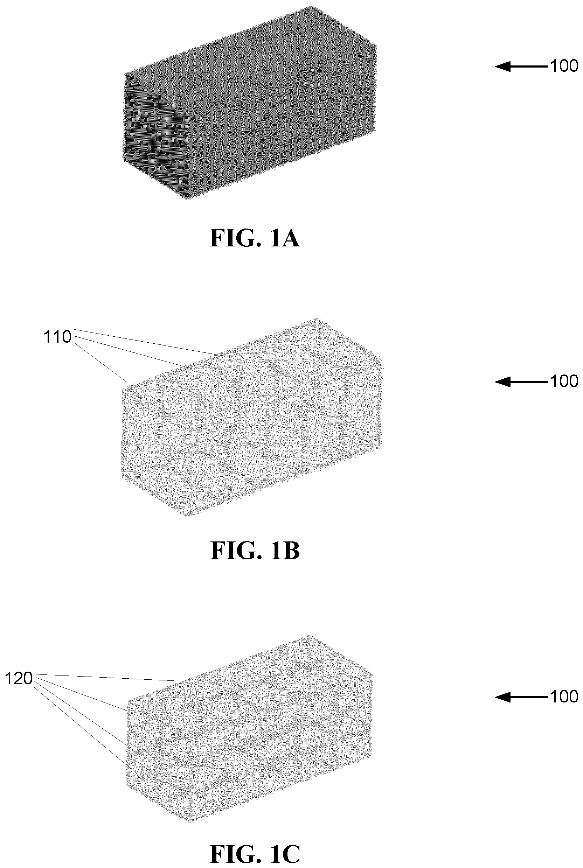

For explanatory purposes, under the embodiments the "design space" refers to a bounding box around the 3D modeled assembly in a CAD system. The bounding box encloses all the geometry models within the modeled assembly. The design space is partitioned into voxels. FIG. 1A shows a simple bounding box 100. FIG. 1B shows the bounding box 100 of FIG. 1A partitioned into 5x1x1 voxels 110. FIG. 1C shows the bounding box 100 of FIG. 1A partitioned into 5x2x3 voxels 120.

Under the first embodiment, the voxels are implemented as small cubes along x,y,z directions in 3D space. The voxel size may be selectable, where smaller voxels yield more accurate results. Given an arbitrary bounding box shape, cube shaped voxels may not always lie within the bounding box surface along each of the directions x, y, z. Therefore, some voxels may extend outside the surface of the bounding box. The user may specify a voxel side length 'a.'

When voxelizing a bounding box for a modeled assembly, it may be useful to assume, on an $x, y, z$ oriented grid, the lowest point of the model bounding box is $(X_{min}, Y_{min}, Z_{min})$ and the highest point of the model bounding box is $(X_{max}, Y_{max}, Z_{max})$. There are $(n_1, n_2, n_3)$ voxels.

$$\begin{cases} n_1 = ceil\left(\frac{X_{max} - X_{min}}{a}\right) \\ n_2 = ceil\left(\frac{Y_{max} - Y_{min}}{a}\right) \\ n_3 = ceil\left(\frac{Z_{max} - Z_{min}}{a}\right) \end{cases} \quad \text{(Eq. 1)}$$

A voxel is indexed along $x, y, z$ directions $(i, j, k)$, where $0 \le i \le n_1 - 1, 0 \le j \le n_2 - 1, 0 \le k \le n_3 - 1$. A voxel itself is its own bounding box with two extremes $(X_{min} + ia, Y_{min} + ja, Z_{min} + ka)$, $(X_{min} + ia + a, Y_{min} + ja + a, Z_{min} + ka + a)$.

For any point $p = (x, y, z)$ in the model bounding box, it sits in a voxel whose index is

$$\begin{cases} i = floor\left(\frac{x - X_{min}}{a}\right) \\ j = floor\left(\frac{y - Y_{min}}{a}\right) \\ k = floor\left(\frac{z - Z_{min}}{a}\right) \end{cases} \quad \text{(Eq.2)}$$

Under the exemplary embodiments, voxels are used to identify space that is available for wire routing. If a voxel intersects with a 3D geometry model, then it is identified as being unavailable for a wire route.

For routing purposes, the method may assume a wire radius r and that may account for additional clearance for the wire routes beyond the physical wire so that the routed wires do not collide with model components. The wire radius r may be user selectable, and may be specified to include the aforementioned additional clearance. It should be noted that while the wire routes must be within the specified wire clearance within the model bounding box, wire routes outside of the boundary of models may have a radius exceeding the specified wire clearance. That is, voxels lying outside the clearance around boundary are considered as available or free for wire routing. Any voxels intersecting with a clearance around model boundary are considered as boundary voxels. Equivalently, if the minimum distance between a voxel and a model is smaller than the clearance, then the voxel is a boundary voxel. Other voxels are free voxels that can be used for wire routing.

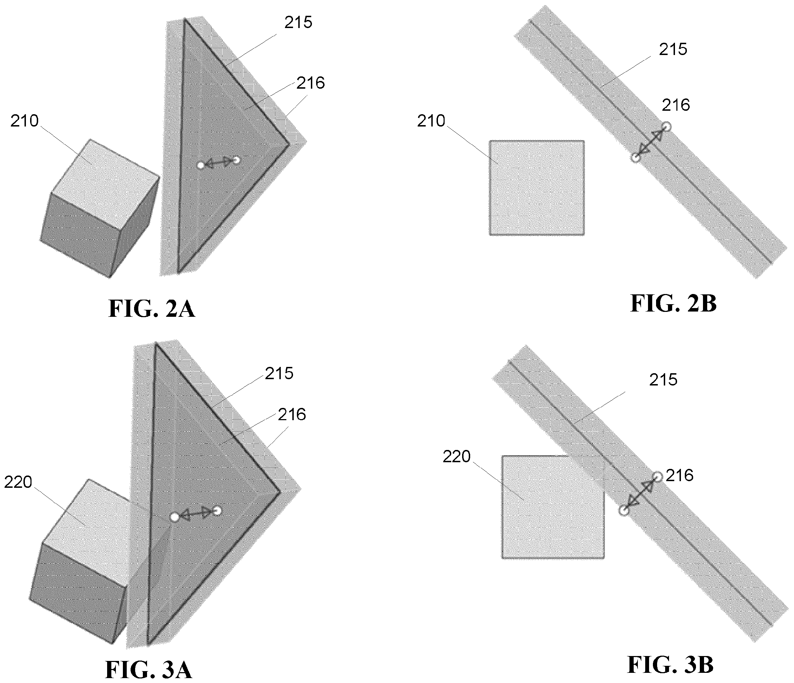

FIG. 2A shows a perspective view of a free voxel 210 in proximity of a triangle shaped component 215. The triangle 215 is depicted showing clearance distance 216 on both sides. The free voxel 210 is not on the boundary of the component 215. FIG. 2B shows the free voxel 210 and the component 215 from a top view.

FIG. 3A shows a perspective view of a boundary voxel 220 in proximity of the triangle shaped component 215. The boundary voxel 220 is on the boundary of the component 215. Here, the boundary voxel 220 intersects with the triangle 215. FIG. 3B shows the boundary voxel 220 and the component 215 from a top view.

There are multiple ways to calculate a minimum distance between modeled components. For example, one common practice is to use triangle meshes of models to calculate distance between geometry models. In CAD systems, geometry models typically have triangular meshes generated for display and other computations. A voxel may also be triangulated by splitting each square face into two triangles. A straightforward way is to use Bounding Volume Hierarchy (BVH) tree to find minimum distance between two triangular meshes.

An approximate and more efficient way of identifying boundary voxels is to check the minimum distance of the center of a voxel and model triangle meshes. If the minimum distance is smaller than half of voxel size $a$ and the clearance value r from a triangle of model mesh, the method marks the voxel as a boundary voxel.

$$dist \le 0.5a + r \quad \text{(Eq. 3)}$$

A more conservative way is checking the diagonal distance

$$dist \le \frac{\sqrt{3}}{2}a + r \quad \text{(Eq. 4)}$$

For one triangle, since not all the voxels in space need to be checked, only the free voxels that are close to the bounding box of a triangle are potentially identified as boundary voxels. The bounding box of a triangle is determined by two extreme points--- one minimum (min) point $P_{min} = (x_{min}, y_{min}, z_{min})$ and one maximum (max) point $P_{max} = (x_{max}, y_{max}, z_{max})$. Given the coordinates of three points $P_1 = (x_1, y_1, z_1)$, and $P_2 = (x_2, y_2, z_2)$, $P_3 = (x_3, y_3, z_3)$,

$$\begin{cases} x_{min} = \min\{x_1, x_2, x_3\} - 05a - r \\ y_{min} = \min\{y_1, y_2, y_3\} - 05a - r \\ z_{min} = \min\{z_1, z_2, z_3\} - 05a - r \end{cases} \quad \text{(Eq. 5)}$$

$$\begin{cases} x_{max} = \max\{x_1, x_2, x_3\} + 05a + r \\ y_{max} = \max\{y_1, y_2, y_3\} + 05a + r \\ z_{max} = \max\{z_1, z_2, z_3\} + 05a + r \end{cases} \quad \text{(Eq. 6)}$$

Only the voxels touching this bounding box are considered as potential boundary voxels. If $P_{min}$ is in voxel $(i_{min}, j_{min}, k_{min})$ and $P_{max}$ is in voxel $(i_{max}, j_{max}, k_{max})$, it is sufficient for the embodiments to check all the voxels $i_{min} \le i \le i_{max}, j_{min} \le j \le j_{max}, k_{min} \le k \le k_{max}$.

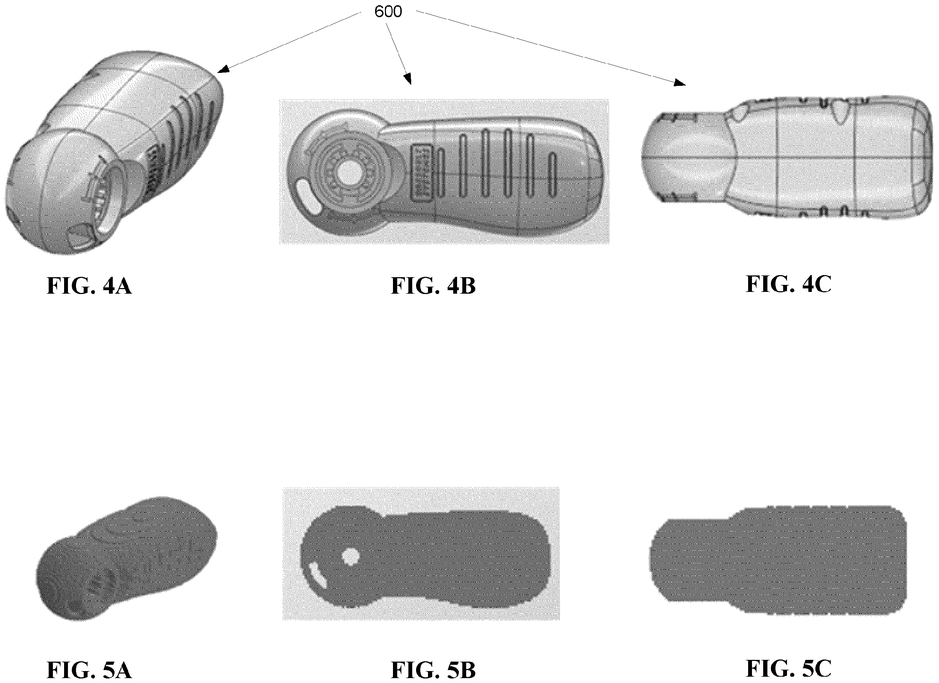

FIGS. 4A-4C show three views of an exemplary assembly, here a battery housing assembly. FIGS. 5A-5C show three corresponding views of boundary voxels for the battery housing assembly of FIGS. 4A-4C. The voxels shown in FIGS. 5A-5C intersect with model inner and outer faces. Because a modeled assembly typically has closed faces, the voxels likewise correspond to the closed faces. Only the voxels intersecting with outer faces are visible in the FIGS. 5A-5C. Usually boundary voxels are sufficient to identify voxels that are not available for routing. 3D models are closed volumes and thus the boundary voxels should be presumed as being closed, as shown by FIGS 5A-5C. While a BSF algorithm may be used to fill internal voxels and external voxels from boundary voxels, this is not necessary as routes cannot go through boundary voxels in the routing method. To increase speed of the whole method, only boundary voxels are identified.

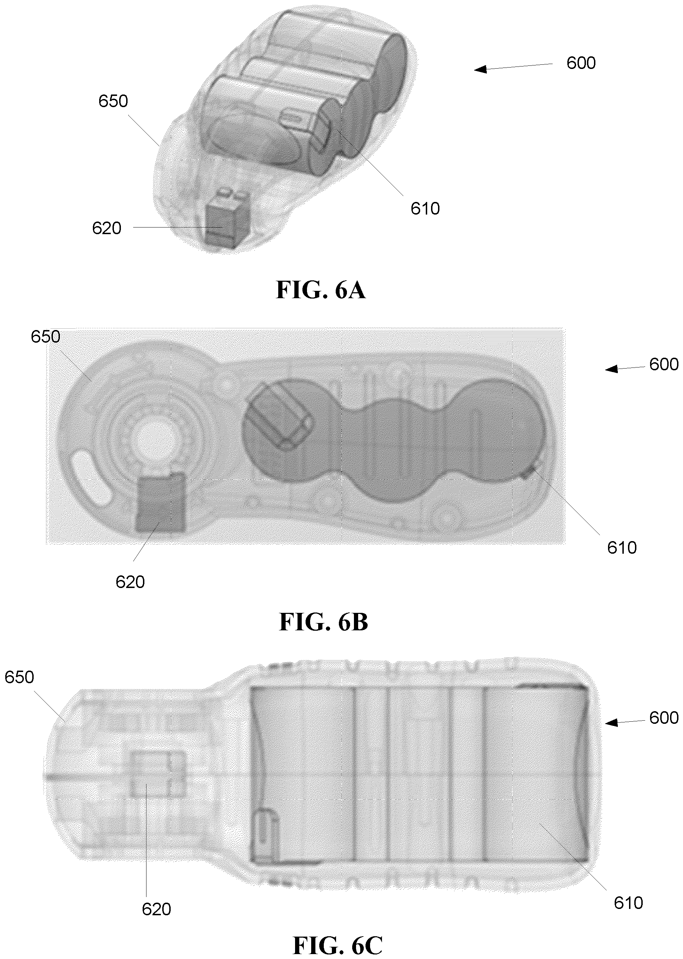

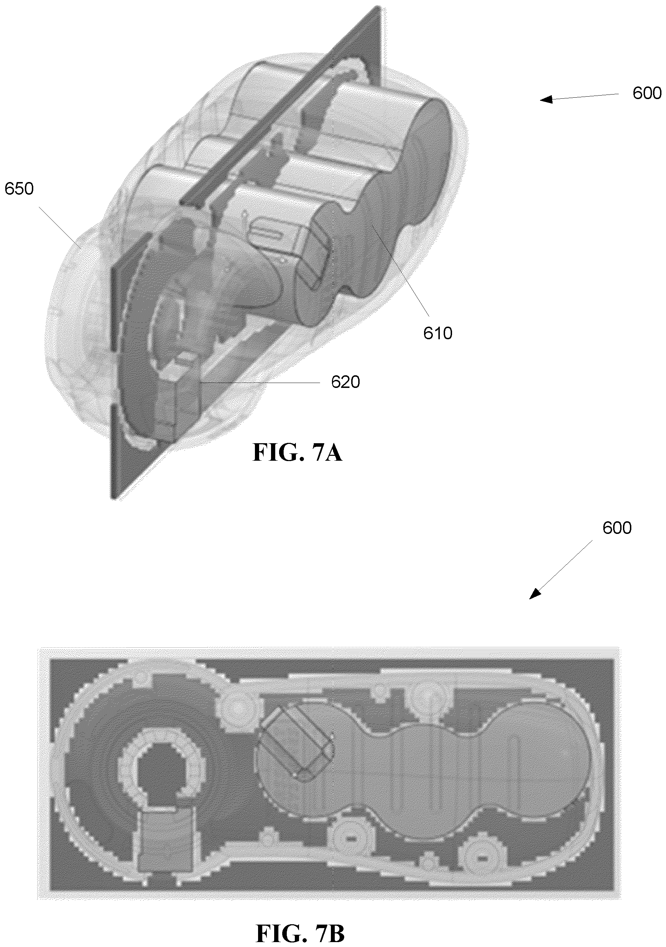

FIGS. 6A-6C show a charging port 620 and battery set 610 inside the exemplary battery housing assembly of FIG. 4A. FIGS. 7A-7B show sections of free voxels around the charging port 620 and battery set 610 inside the exemplary battery housing assembly of FIG. 6A. Only free voxels are available for wire routing.

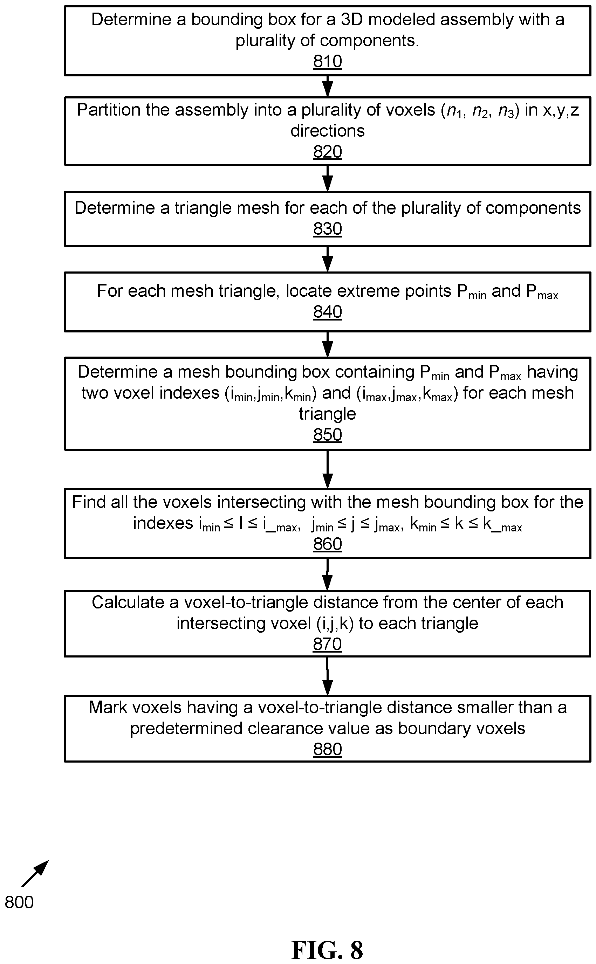

FIG. 8 is a flowchart 800 of an exemplary method embodiment for voxelization of an assembly. It should be noted that any process descriptions or blocks in flowcharts should be understood as representing modules, segments, portions of code, or steps that include one or more instructions for implementing specific logical functions in the process, and alternative implementations are included within the scope of the present invention in which functions may be executed out of order from that shown or discussed, including substantially concurrently or in reverse order, depending on the functionality involved, as would be understood by those reasonably skilled in the art of the present invention.

An assembly bounding box is determined for an assembly having a plurality of components, as shown by block 810. The assembly is partitioned into a plurality of voxels ($n_1, n_2, n_3$) in $x, y, z$ directions, as shown by block 820. A triangle mesh is determined for each of the plurality of components, as shown by block 830. Extreme points $P_{min}$ and $P_{max}$ are located for each mesh triangle for each mesh, as shown by block 840. A mesh bounding box two voxel indexes ($i_{min}, j_{min}, k_{min}$) and ($i_{max}, j_{max}, k_{max}$), containing $P_{min}$ and $P_{max}$ is determined for each triangle of each triangle mesh as shown by block 850.

All the voxels intersecting with the mesh bounding box for the indexes $i_{min} \leq i \leq i_{max}, j_{min} \leq j \leq j_{max}, k_{min} \leq k \leq k_{max}$ are found, as shown by block 860. A voxel-to-triangle distance is calculated from the center of each intersecting voxel ($i, j, k$) to each triangle, as shown by block 870. The voxel for each voxel-to-triangle distance smaller than a predetermined clearance value is marked voxel as a boundary voxel, as shown by block 880.

The free voxels may be thought of as islands in space separated by boundary voxels. For two connection points, the exemplary method locates two voxels that contain the connection points, as described further below.

Voxels form a natural weighted graph in 3D space, a "voxel graph." A voxel can have neighbors by sharing faces, edges, and vertices. For each voxel, there are 6 faces, 12 edges, and 8 vertices, resulting in 26 total possible neighbors. Voxels may be thought of as nodes in graph. Neighbors determines connectivity relationship. The 3D Euclidean distance between two center points of two neighbor voxels is the weight between the two connected nodes in the graph.

Several known path finding algorithms may be used to find the shortest path between any two nodes in a graph, which are employed, for example, in gaming artificial intelligence (AI) and robotics path finding. A* (pronounced "A-star") and its mutations are the most popular path finding algorithms due to their simplicity and efficiency (see among polyhedral obstacles." Communications of the ACM 22.10 (1979): 560-570). These methods begin with a start voxel s and iteratively expand to neighbor voxels by choosing the path with the smallest cost until the end voxel e is reached. The path finding algorithms produce a path from the start voxel s to the end voxel e.

The cost of path finding algorithms are based on the distance definition between two neighbor nodes or voxels. The produced paths are not necessarily the shortest distance in real 3D space, but may approximate the real shortest distance in 3D space. The embodiments use path finding algorithms to find the shortest distance path in the voxel graph and as starting point for the eventual wire route.

A* method can only search in certain directions across faces, edges, and vertices. There may be many turning points in an A* produced path. The embodiments may remove a turning point if the resulting path does not cross boundary voxels, yielding a shorter path. It is desirable to remove as many intermediate turning points along the path as possible. If a line between two points does not cross boundary voxels, the two points may be connected directly. Checking if a straight line between two points crosses boundary voxels is referred to as checking for "line of sight." If there are no boundary voxels between two points, then these two points satisfy line of sight.

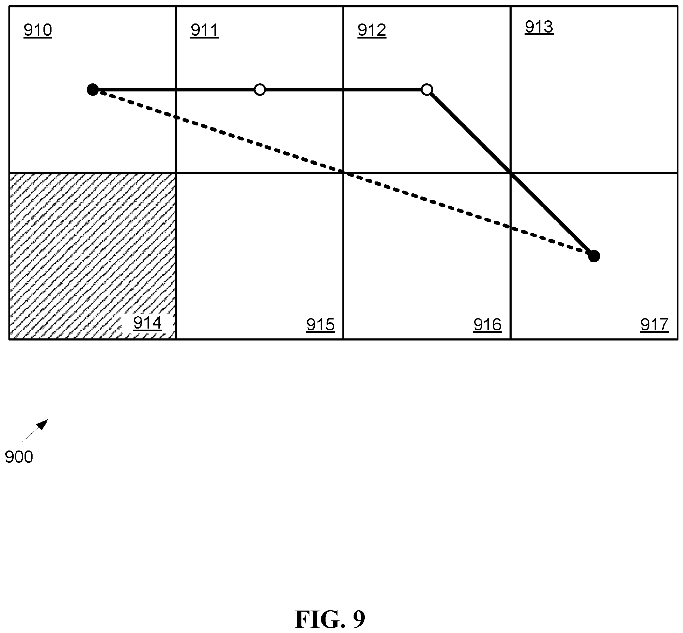

For example, FIG. 9 shows a voxel graph 900 with a voxel path (solid lines) in between the start voxel 910 and the end voxel 917. The shaded voxel is a boundary voxel 914. The solid lines show the shortest distance from graph that incorporate the voxel centers of voxels 910, 911, 912, and 917. However, the real shortest Euclidean distance between the start voxel 910 and the end voxel 917 is the dotted line. The dotted line passes through voxels 910, 911, 916, and 917. Here, a voxel 912 ("a turning point") and voxel 911 can be removed from the (solid line) path and the two end points 910 and 917 are connected directly (by the dotted line) to form a shorter path.

If A* method is used to find a path of voxels, the method of the embodiments may use line of sight to remove potential turning points using an iterative process starting with checking the first voxel and the third voxel in the path. If the center points of the first and the third voxels satisfy line of sight condition, then the second voxel can be removed from the path. In a subsequent iteration, the method similarly checks if the third voxel can be removed in the same way. If the third voxel cannot be removed, the second voxel likewise cannot be removed, and the process continues to check second voxel and the fourth voxel. The method iterates with line-of-sight accordingly until no voxels may be removed.

The following is a more detailed description of the embodiment incorporating the A* and line of sight approaches.

The method maintains a "parent map" P(v) to keep track of the voxel in the previous step(s) along the path. In the path from the start voxel s to a current voxel $v$, the voxel P(v) immediately precedes the voxel $v$.

The cost function used in A* algorithm has two parts $F(v) = G(v) + H(v)$. The cost function $G(v)$ is the total weight or distance of the path from start voxel s to the current voxel $v$. The heuristic cost function $H(v)$ is a heuristic distance from current voxel $v$ to the end voxel e. The heuristic function has many forms of estimation (see Nash, Alex, Sven Koenig, and Craig Tovey. "Lazy Theta*: Any-angle path planning and path length analysis in 3D." Proceedings of the AAAI Conference on Artificial Intelligence. Vol. 24. No. 1. 2010). For example, a simple center distance between the current voxel $v$ and the end voxel e can be used such that $h(v) = Dist(v, e)$. The total cost function is $F(v) = G(v) + H(v)$. A closed set C is used to record all the voxels that are already in the paths. A voxel already in the set C is not considered as candidate voxels for the following iterations.

The embodiments use a priority queue Q to keep track of all the voxels that are candidate to be extended in subsequent iterations. The voxels in the priority queue $Q$ are neighbors of some voxels in the set C. The steps for path selection are summarized below.

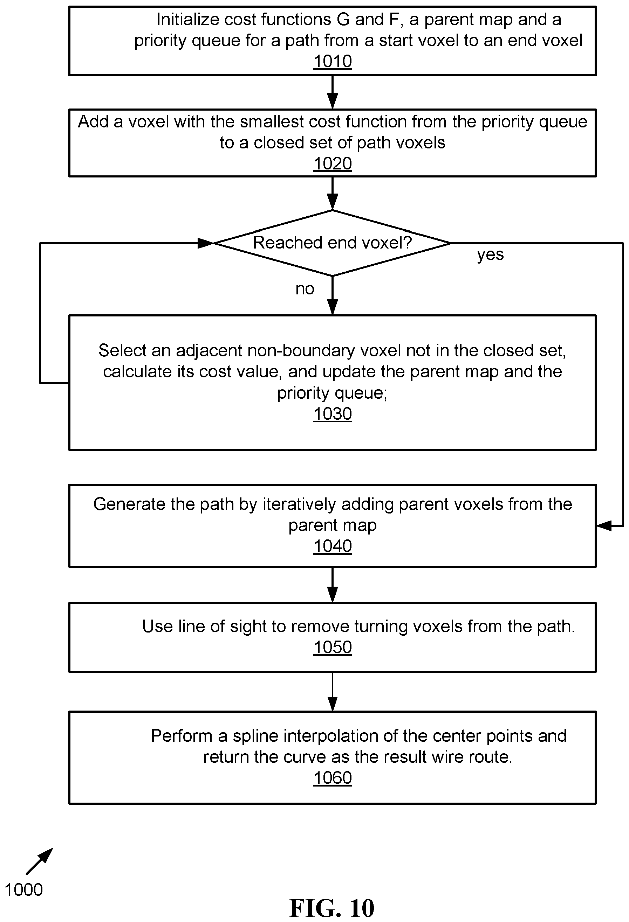

FIG. 10 is a flowchart 1000 of a first exemplary method embodiment for route selection of a voxelized assembly (A star). The method begins by initializing cost functions G and F, a parent map, and a priority queue for a path from a start voxel to an end voxel, as shown by block 1010. For the start voxel s, set $G$ cost and F cost s,t, $G(s) = 0$, $F(s) = H(s)$. Set the parent map $P(s) = s$, insert pair $(s, F(s))$ into the priority queue $Q$.

The method checks if the priority queue $Q$ is empty. If the priority queue is empty, the method determines a path is not found. Otherwise, the method determines a top element which is the voxel $v$ with the smallest cost function from $Q$ such that

$$v = \operatorname*{argmin}_{(x,F(x))\in Q} F(x). \quad \text{(Eq. 5)}$$

The method adds $v$ to the closed set C, as shown by block 1020.

If $v$ is not the end voxel $e$, the method finds neighbor voxels $n$ of $v$ such that $n \in Neighbor(v)$ that are not boundary voxels and not in the closed set C, such that $n \notin C$, as shown by block 1030. For each valid neighbor voxel $n$ the method calculates a tentative $G$ cost of voxel $n$ by adding the distance between voxel $v$ and its neighbor voxel to $G(v)$ $v$ such that

$$G(n) = G(v) + Dist(v,n). \quad \text{(Eq. 6)}$$

If the value $G(n)$ is smaller than the original G cost, the embodiment uses this new value ask the $G$ cost of voxel $n$, updates the $F$ cost by $F(n) = G(n) + H(n)$ and updates the parent map $P(n) = v$. The new pair $(n, F(n))$ is inserted to the priority queue $Q$.

The method generate the path from the start voxel to the end voxel by iteratively adding parent voxels from the parent map, as shown by block 1040.

If a path is not found, then the method determines there is no available wire route, and returns an empty wire route. If there is a path, the method employs line of sight to remove turning voxels, as shown by block 1050. For the rest of the voxels, the method performs a spline interpolation of the center points and returns the curve as the resulting wire route, as shown by block 1060.

An enhancement of the above described embodiment is to use line of sight during iterations to free search directions. The enhancement is effectively an any-angle path finding method. An example of this approach is called the Lazy Theta star method (see Nash, Alex, Sven Koenig, and Craig Tovey. "Lazy Theta*: Any-angle path planning and path length analysis in 3D." Proceedings of the AAAI Conference on Artificial Intelligence. Vol. 24. No. 1. 2010). As described above regarding FIG. 10 block 1030, in the A* method, the parent voxel of a neighbor voxel $n$ is set by the current voxel $v$ such that $P(n) = v$. In contrast, the Lazy Theta star method always uses the parent of voxel $v$ for all the neighbor voxel $n$ such that $P(n) = P(v)$. As a result, the potential turning point voxel is skipped in the path. But voxel $n$ and $P(n)$ may not satisfy line of sight condition. The line of sight condition is checked before the neighbor voxel is used as the current voxel. If line of sight is not satisfied between the current voxel $v$ and P(v), the method looks for a new parent voxel from the neighbor voxels $p$ in the closed set C, such that $p \in C$. The method chooses the parent voxel $p$ with the minimum cost function F(p) among the eligible neighbor voxels.

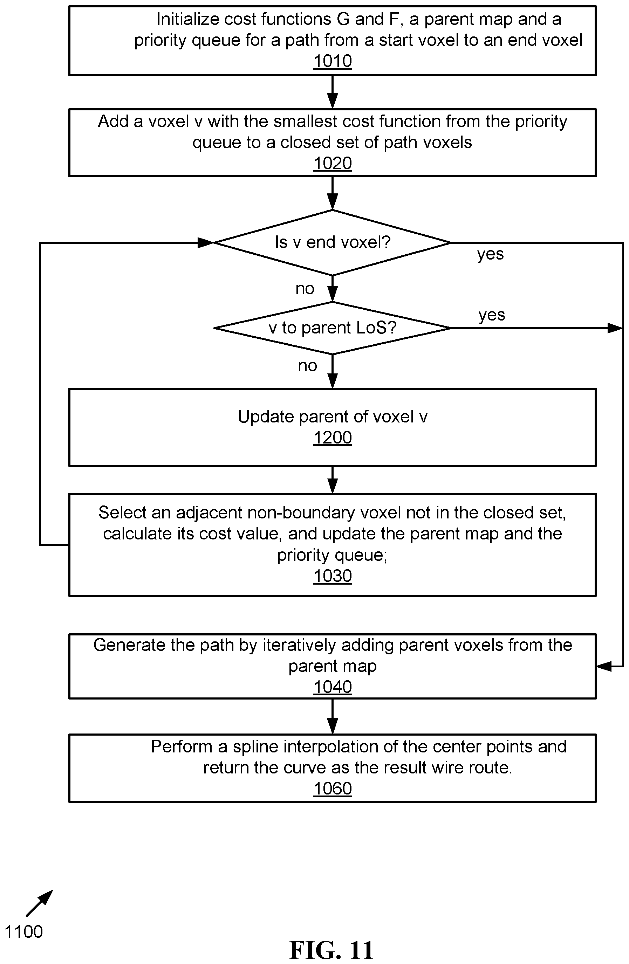

FIG. 11 is a flowchart 1100 of a second exemplary method embodiment for route selection of a voxelized assembly (lazy theta star). The method begins by initializing cost functions G and F, a parent map, and a priority queue for a path from a start voxel to an end voxel, as shown by block 1010. For the start voxel s, set $G$ cost and F cost s,t, $G(s) = 0$, $F(s) = H(s)$. Set the parent map $P(s) = s$, insert pair $(s, F(s))$ into the priority queue $Q$.

The method checks if the priority queue $Q$ is empty. If the priority queue is empty, the method determines a path is not found. Otherwise, the method determines a top element which is the voxel $v$ with the smallest cost function from $Q$ such that

$$v = \operatorname*{argmin}_{(x,F(x))\in Q} F(x). \quad \text{(Eq. 5)}$$

The method adds $v$ to the closed set C, as shown by block 1020.

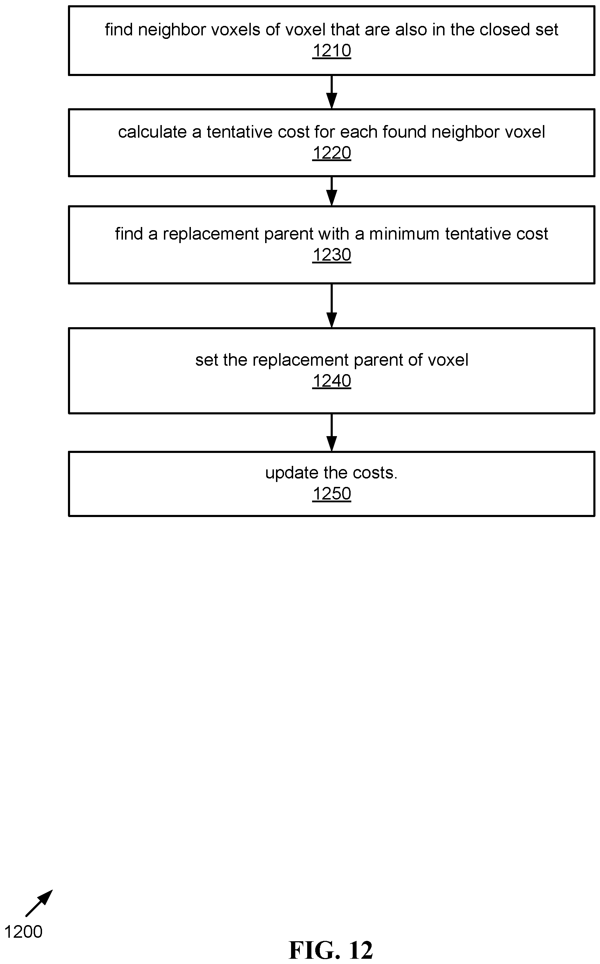

The second embodiment checks if voxel $v$ and its parent P(v) satisfy line of sight (LoS) conditions. If not, P(v) needs an update as shown by block 1200. Block 1200 is expanded in FIG. 12 to detail the subroutine to update P(v).

Neighbor voxels of voxel $v$ that are also in the closed set are found, as shown by block 1210. Here, the embodiment finds all the neighbors $n$ of voxel $v$ such that $n \in Neighbor(v)$ that are also in close set C. A tentative cost is calculated for each found neighbor voxel, as shown by block 1220, where the tentative cost $F(n) = G(v) + Dist(v, n)$ for all neighbors *n* found as per block 1210. A replacement parent with a minimum tentative cost is found, as shown by block 1230. Here, the voxel *p* with minimum tentative cost F(p) becomes the new parent of voxel *v* such that *p* = argmin *G(v) + a*. The replacement parent of voxel *v* is set *n is from Step 3a* such that P(v) = *p* as the parent of voxel *v*, as shown by block 1240. The costs are updated, where the update costs are *G(v) = G(p) + a* and *F(v) = G(v) + H(v)*, as shown by block 1250.

Returning to FIG. 11, if *v* is not the end voxel *e*, the method finds neighbor voxels *n* of *v* such that *n* ∈ *Neighbor(v)* that are not boundary voxels and not in the closed set C, such that *n* ∉ C, as shown by block 1030. For each valid neighbor voxel *n* the method calculates a tentative G cost of voxel *n* by adding the distance between voxel *v* and its neighbor voxel to G(v) *v* such that

$$G(n) = G(v) + Dist(v, n). \quad \text{(Eq. 6)}$$

If the value *G(n)* is smaller than the original G cost, the embodiment uses this new value ask the G cost of voxel *n*, updates the F cost by *F(n) = G(n) + H(n)* and updates the parent map *P(n) = v*. The new pair (*n, F(n)*) is inserted to the priority queue Q.

The method generates the path from the start voxel to the end voxel by iteratively adding parent voxels from the parent map, as shown by block 1040.

If a path is not found, then the method determines there is no available wire route, and returns an empty wire route. If there is a path, the method employs line of sight to remove turning voxels, as shown by block 1050. For the rest of the voxels, the method performs a spline interpolation of the center points and returns the curve as the resulting wire route, as shown by block 1060.

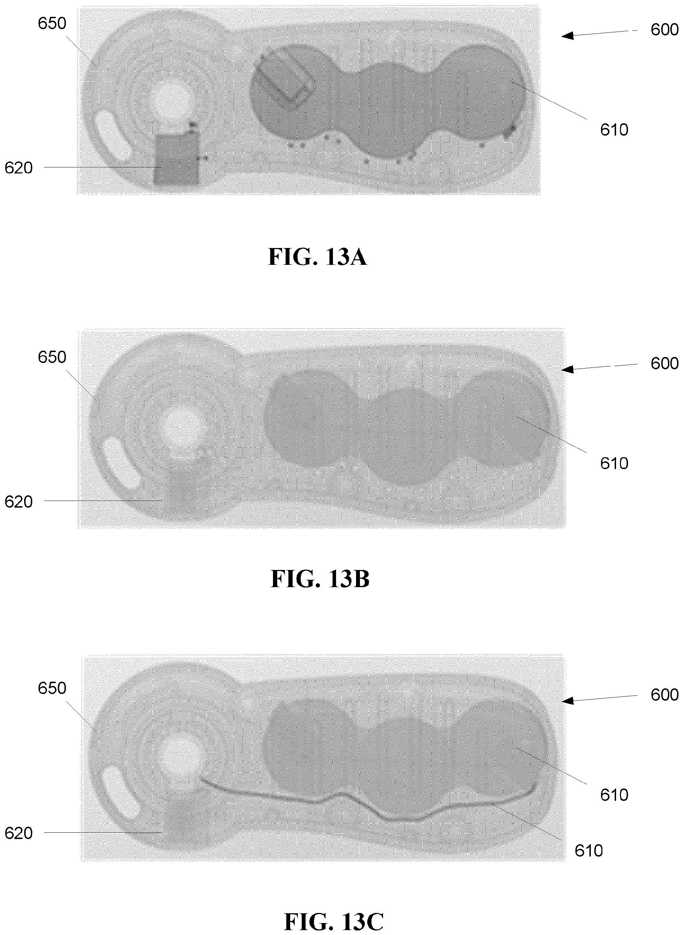

In the following example, the second embodiment (Lazy Theta star) method is applied to the battery assembly model 600 of FIGS. 6A-6C. FIGS. 13A-13C illustrate steps for producing a first wire path. A first wire connection point is located on one end of battery the 610 and a second wire connection point is located on one end of the charging port 620. Based on the shape of the battery set 610 and shape of the battery assembly housing 650, the second embodiment method finds s series of voxels (blue color) shown in FIG. 13A. After spline interpolation, a wire route is derived (yellow color) in FIG. 13B. The white circles are the center points of the key voxels on the path in FIG. 13A. The final wire path 1310 produced by the method is shown in green by FIG. 13C.

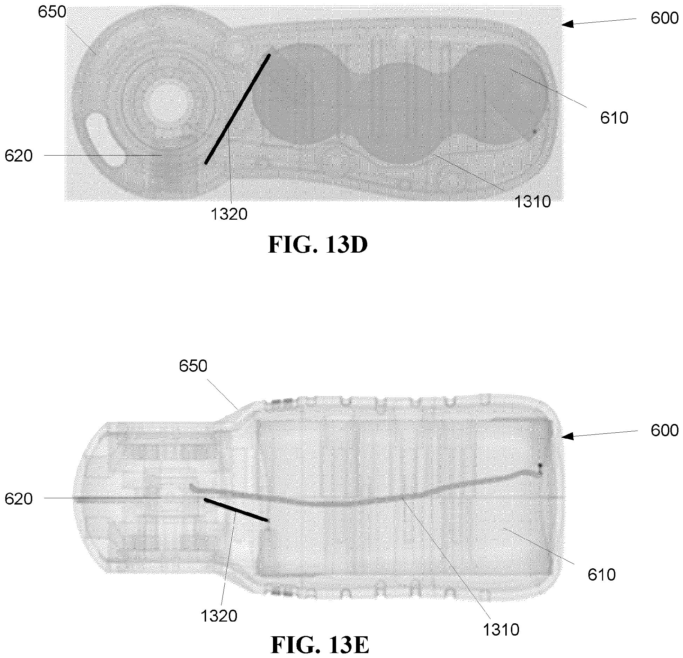

FIG. 13D shows the second embodiment method applied to a second wire 1320 with one connection on the top left of the battery set 610 and one connection on the lower part of the charging port 620. The route of the second wire 1320 is a straight line between the two connection points since there is nothing blocking the way, as the routing method finds the best available solution. FIG. 13E shows a top view of the final result of the first wire path 1310 and the second wire path 1320 as a result of applying the method of the second embodiment.

Voxel implementation is an easy and fast way to generate 3D grid cells, and is also convenient for path finding algorithms. While less desirable, other types of 3D grids may be used with path finding algorithms for auto-routing. The exemplary embodiments may be naturally adapted to other 3D grids. For example, all 3D Finite Element grids such as tetrahedral elements and hexahedron elements can be directly used. These grids can construct graphs with connectivity defined by vertices, edges or faces, where two neighbor grids are connected by vertices, edges, or faces. Finite Element grids are more accurate on the boundaries than voxels as they can interpolate to the original geometry. However, they are much more expensive to generate and the subsequent path finding requires more computation for grid distance and line of sight checking.

In alternative embodiments, other path finding algorithms may be used for searching for shortest wire route distance. For example, Breadth First Search algorithm (BFS), Depth First Search Algorithm (DFS), and Dijkstra Algorithm are all feasible with some adaptations. BFS and DFS algorithms are considered much more expensive than A Star or Theta Star methods. Even Dijkstra Algorithm is more time consuming as it does not consider search directions. To avoid artifacts of routing, Line of Sight may be preferable to remove turns and spline interpolation or fitting before final routing results.

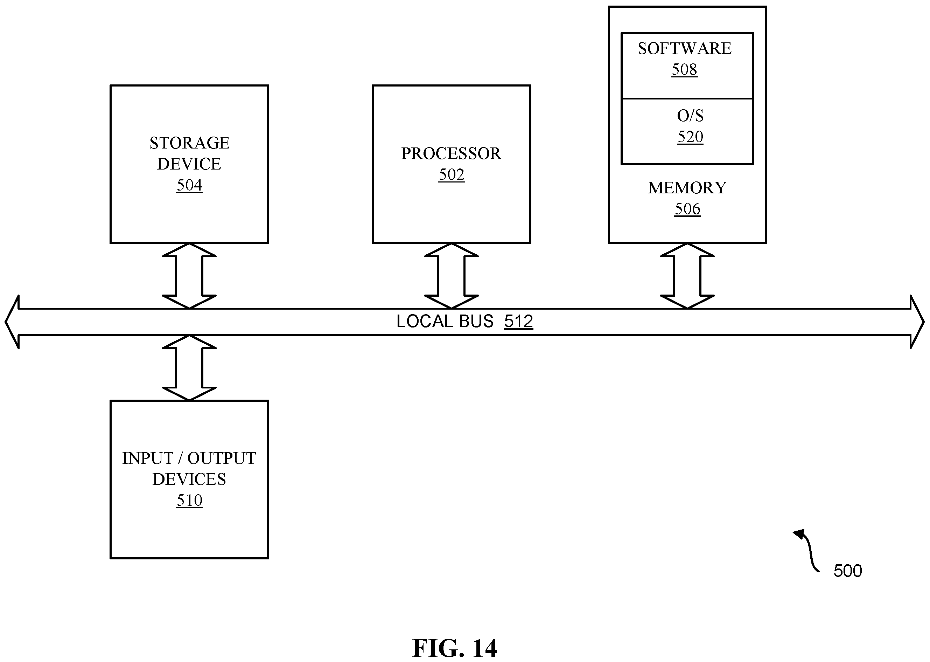

As previously mentioned, the present system for executing the functionality described in detail above may be a computer, an example of which is shown in the schematic diagram of FIG. 14. The system 500 contains a processor 502, a storage device 504, a memory 506 having software 508 stored therein that defines the abovementioned functionality, input, and output (I/O) devices 510 (or peripherals), and a local bus, or local interface 512 allowing for communication within the system 500. The local interface 512 can be, for example but not limited to, one or more buses or other wired or wireless connections, as is known in the art. The local interface 512 may have additional elements, which are omitted for simplicity, such as controllers, buffers (caches), drivers, repeaters, and receivers, to enable communications. Further, the local interface 512 may include address, control, and/or data connections to enable appropriate communications among the aforementioned components.

The processor 502 is a hardware device for executing software, particularly that stored in the memory 506. The processor 502 can be any custom made or commercially available single core or multi-core processor, a central processing unit (CPU), an auxiliary processor among several processors associated with the present system 500, a semiconductor based microprocessor (in the form of a microchip or chip set), a macroprocessor, or generally any device for executing software instructions.

The memory 506 can include any one or combination of volatile memory elements (e.g., random access memory (RAM, such as DRAM, SRAM, SDRAM, etc.)) and nonvolatile memory elements (e.g., ROM, hard drive, tape, CDROM, etc.). Moreover, the memory 506 may incorporate electronic, magnetic, optical, and/or other types of storage media. Note that the memory 506 can have a distributed architecture, where various components are situated remotely from one another, but can be accessed by the processor 502.

The software 508 defines functionality performed by the system 500, in accordance with the present invention. The software 508 in the memory 506 may include one or more separate programs, each of which contains an ordered listing of executable instructions for implementing logical functions of the system 500, as described below. The memory 506 may contain an operating system (O/S) 520. The operating system essentially controls the execution of programs within the system 500 and provides scheduling, input-output control, file and data management, memory management, and communication control and related services.

The I/O devices 510 may include input devices, for example but not limited to, a keyboard, mouse, scanner, microphone, etc. Furthermore, the I/O devices 510 may also include output devices, for example but not limited to, a printer, display, etc. Finally, the I/O devices 510 may further include devices that communicate via both inputs and outputs, for instance but not limited to, a modulator/demodulator (modem; for accessing another device, system, or network), a radio frequency (RF) or other transceiver, a telephonic interface, a bridge, a router, or other device.

When the system 500 is in operation, the processor 502 is configured to execute the software 508 stored within the memory 506, to communicate data to and from the memory 506, and to generally control operations of the system 500 pursuant to the software 508, as explained above.

When the functionality of the system 500 is in operation, the processor 502 is configured to execute the software 508 stored within the memory 506, to communicate data to and from the memory 506, and to generally control operations of the system 500 pursuant to the software 508. The operating system 520 is read by the processor 502, perhaps buffered within the processor 502, and then executed.

When the system 500 is implemented in software 508, it should be noted that instructions for implementing the system 500 can be stored on any computer-readable medium for use by or in connection with any computer-related device, system, or method. Such a computer-readable medium may, in some embodiments, correspond to either or both the memory 506 or the storage device 504. In the context of this document, a computer-readable medium is an electronic, magnetic, optical, or other physical device or means that can contain or store a computer program for use by or in connection with a computer-related device, system, or method. Instructions for implementing the system can be embodied in any computer-readable medium for use by or in connection with the processor or other such instruction execution system, apparatus, or device. Although the processor 502 has been mentioned by way of example, such instruction execution system, apparatus, or device may, in some embodiments, be any computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the processor or other such instruction execution system, apparatus, or device.

Such a computer-readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted, or otherwise processed in a suitable manner if necessary, and then stored in a computer memory.

In an alternative embodiment, where the system 500 is implemented in hardware, the system 500 can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

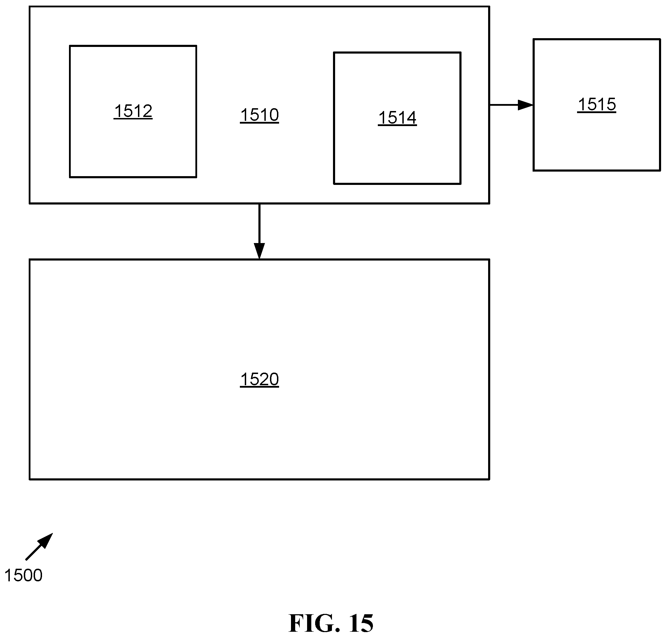

The above-described methods may be used for controlling a manufacturing system to produce an assembly with collision avoidance wire routing, as shown by FIG. 15. A system 1500 for manufacturing an electrical-mechanical assembly with an efficient wire route through the assembly avoiding collisions with a plurality of electrical-mechanical assembly components.

A computer assisted drafting (CAD) system 1510 includes a processor 1512 and a memory 1514. The processor is configured to execute non-transient instructions received from the memory. When executed by the processor 1512, the CAD system 1510 performs the steps of receiving a three dimensional (3D) model of the assembly, identifying a first wire route termination location and as second wire route termination location, converting the received 3D model into a volume model distinguishing between occupied and available space, and finding a wire route from the first wire route termination location through the assembly available space to the second wire route termination location. The CAD system 1510 displays the wire rout on a display device 1515. Automated manufacturing machinery such as a computer numerical control (CNC) machine 1520 is configured to receive the 3D wire-routed assembly model from the CAD system 1510 and manufacture the wire-routed assembly according to the 3D wire-routed assembly model received from the CAD system 1510. For example, a wire harness assembly device may receive the wire-routed assembly model to manufacture a wiring harness according to the wiring path in the wire-routed assembly model. Similarly, a wiring machine may be used to install a wiring harness in the wire-routed assembly according to the received wire-routed assembly model.

The above embodiments offer several advantages over previous wire routing techniques. For example, the system/method inputs are simple, such that users provide a geometry model corresponding to a real environment, tolerance or voxel size for accuracy and connection points. Thereafter, from the user perspective the wire routing is fully automatic. The embodiments determine the shortest path from a start connection point to an end connection point. The embodiments only search for wire routes in available space, avoiding interference with existing geometry and wires. The resulting path is (or is close to) the shortest possible path. The embodiments adjust the route along its course so as to ensure a valid mathematical result for the underlying path.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A computer implemented method for determining an efficient wire route through an assembly to be manufactured while avoiding collisions with a plurality of electrical-mechanical assembly components, comprising the steps of:

   receiving a three dimensional (3D) model of the assembly;
   identifying a first wire route termination location and a second wire route termination location;
   converting the received 3D model into a volume model distinguishing between assembly occupied space and assembly available space;
   finding a wire route from the first wire route termination location through the assembly available space to the second wire route termination location; and
   displaying an image of the wire route in the model of the assembly.

2. The method of claim 1, wherein a plurality of wire routes are found, and further comprising the step of determining a shortest wire route of the plurality of wire routes.

3. The method of claim 2, wherein the volume model is a voxelized model comprising a plurality of voxels, and further comprising the steps of:

   classifying each voxel of the plurality of voxels as one of the group of an available voxel and an unavailable voxel, wherein an available voxel is able to facilitate a portion of a wire route; and
   searching the available voxels to find the wire route from the first wire route termination location through the assembly to the second wire route termination location.

4. The method of claim 3, further comprising the steps of:

   determining a bounding box for the 3D modeled assembly;
   partitioning the assembly into a plurality of voxels $(n_1, n_2, n_3)$ in $x, y, z$ directions;
   determining a triangle mesh for each of the plurality of electrical-mechanical assembly components;
   locating extreme points $P_{min}$ and $P_{max}$ for each mesh triangle of each component triangle mesh,
   determining a mesh bounding box containing $P_{min}$ and $P_{max}$ having two voxel indexes $(i_{min}, j_{min}, k_{min})$ and $(i_{max}, j_{max}, k_{max})$ for each mesh triangle;
   finding all the voxels intersecting with the mesh bounding box for the indexes $i_{min} \le I \le i_{\_max}, j_{min} \le j \le j_{max}, k_{min} \le k \le k_{\_max}$;
   calculating a voxel-to-triangle distance from the center of each intersecting voxel $(i,j,k)$ to each triangle; and

marking voxels having a voxel-to-triangle distance smaller than a predetermined clearance value as boundary voxels.

5. The method of claim 3, further comprising the steps of:

   initializing cost functions, a parent map, and a priority queue for a path from a start voxel comprising the first wire route termination location to an end voxel comprising the wire route termination location;
   adding a first voxel with the smallest cost function first cost value from the priority queue to a closed set of path voxels;
   selecting an adjacent non-boundary second voxel not in the closed set;
   calculating a second cost value of the second voxel and updating the parent map and the priority queue;
   generating the path by iteratively adding parent voxels from the parent map; and
   performing a spline interpolation of center points and return a resulting curve as the wire route.

6. The method of claim 5, further comprising the step of using line of sight to remove turning voxels from the path.

7. The method of claim 5, further comprising the steps of:

   finding neighbor voxels of the voxel $v$ that are also in the closed set;
   calculating tentative cost for a found neighbor voxel;
   finding a replacement parent with a minimum tentative cost; and
   setting the replacement parent of the voxel $v$ and updating the costs.

8. The method of claim 7, further comprising the step of determining whether the voxel $v$ and its parent $P(v)$ satisfy line of sight conditions.

9. The method of claim 2, wherein the volume model comprises a finite element grid.

10. The method of claim 2, further comprising the steps of:

    receiving the 3D model of the assembly comprising the wire route by an automated manufacturing machine; and
    manufacturing a wire-routed assembly according to the 3D model of the assembly comprising the wire route.

11. A computer program comprising instructions which, when the program is executed by a computer, cause the computer to carry out the method of any one of claims 1 to 10.

12. A computer readable storage medium having recorded thereon a computer program of claim 11.

13. A system comprising a processor coupled to a memory, the processor configured to execute non-transient instructions received from the memory, that when executed by the processor, performs the steps of the method of any one of claims 1 to 10.

**FIG. 1A**

**FIG. 1B**

**FIG. 1C**

215
216
210

**FIG. 2B**

215
216
220

**FIG. 3B**

215
216
210

**FIG. 2A**

215
216
220

**FIG. 3A**

FIG. 4C

FIG. 5C

FIG. 4B

FIG. 5B

600

FIG. 4A

FIG. 5A

650
620
610
600

**FIG. 6A**

650
600
620
610

**FIG. 6B**

650
600
620
610

**FIG. 6C**

**FIG. 7A**

**FIG. 7B**

Determine a bounding box for a 3D modeled assembly with a plurality of components.
810

Partition the assembly into a plurality of voxels ($n_1$, $n_2$, $n_3$) in x,y,z directions
820

Determine a triangle mesh for each of the plurality of components
830

For each mesh triangle, locate extreme points $P_{min}$ and $P_{max}$
840

Determine a mesh bounding box containing $P_{min}$ and $P_{max}$ having two voxel indexes ($i_{min}$,$j_{min}$,$k_{min}$) and ($i_{max}$,$j_{max}$,$k_{max}$) for each mesh triangle
850

Find all the voxels intersecting with the mesh bounding box for the indexes $i_{min} \leq I \leq i\_{max}$, $j_{min} \leq j \leq j_{max}$, $k_{min} \leq k \leq k\_{max}$
860

Calculate a voxel-to-triangle distance from the center of each intersecting voxel (i,j,k) to each triangle
870

Mark voxels having a voxel-to-triangle distance smaller than a predetermined clearance value as boundary voxels
880

800

**FIG. 8**

**FIG. 9**

Initialize cost functions G and F, a parent map and a
priority queue for a path from a start voxel to an end voxel
1010

↓

Add a voxel with the smallest cost function from the priority queue
to a closed set of path voxels
1020

↓

Reached end voxel?                    yes

no

↓

Select an adjacent non-boundary voxel not in the closed set,
calculate its cost value, and update the parent map and the
priority queue;
1030

Generate the path by iteratively adding parent voxels from the
parent map
1040

↓

Use line of sight to remove turning voxels from the path.
1050

↓

Perform a spline interpolation of the center points and
return the curve as the result wire route.
1060

1000

# FIG. 10

Initialize cost functions G and F, a parent map and a
priority queue for a path from a start voxel to an end voxel
1010

Add a voxel v with the smallest cost function from the priority
queue to a closed set of path voxels
1020

Is v end voxel? —— yes

no

v to parent LoS? —— yes

no

Update parent of voxel v
1200

Select an adjacent non-boundary voxel not in the closed set,
calculate its cost value, and update the parent map and the
priority queue;
1030

Generate the path by iteratively adding parent voxels from the
parent map
1040

Perform a spline interpolation of the center points and
return the curve as the result wire route.
1060

1100

**FIG. 11**

find neighbor voxels of voxel that are also in the closed set
1210

calculate a tentative cost for each found neighbor voxel
1220

find a replacement parent with a minimum tentative cost
1230

set the replacement parent of voxel
1240

update the costs.
1250

1200

**FIG. 12**

**FIG. 13A**

**FIG. 13B**

**FIG. 13C**

**FIG. 13D**

**FIG. 13E**

STORAGE
DEVICE
504

PROCESSOR
502

SOFTWARE
508

O/S
520

MEMORY
506

LOCAL BUS 512

INPUT / OUTPUT
DEVICES
510

500

**FIG. 14**

1512

1510

1514

1515

1520

1500

**FIG. 15**

Europäisches
Patentamt

European
Patent Office

Office européen
des brevets

# EUROPEAN SEARCH REPORT

**Application Number**

EP 24 19 2108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHRISTIAN VAN DER VELDEN ET AL: "A 3D KNOWLEDGE-BASED ROUTER FOR WIRING IN AEROSPACE VEHICLES", 25TH INTERNATIONAL CONGRESS OF THE AERONAUTICAL SCIENCES, 8 September 2006 (2006-09-08), XP055590544, | 1-5,9-13 | INV. G06F30/10 G06F30/18 G06F30/20 G06F30/23 |
| Y | * the whole document * | 6-8 | |
| X | CHRISTIAN VAN DER VELDEN ET AL: "An intelligent system for automatic layout routing in aerospace design", INNOVATIONS IN SYSTEMS AND SOFTWARE ENGINEERING ; A NASA JOURNAL, SPRINGER, BERLIN, DE, vol. 3, no. 2, 8 May 2007 (2007-05-08), pages 117-128, XP019510046, ISSN: 1614-5054, DOI: 10.1007/S11334-007-0021-4 | 1,9-13 | |
| A | * the whole document * | 2-8 | |
| | | | TECHNICAL FIELDS SEARCHED (IPC) |
| X | US 2018/012396 A1 (SUN GUOPING [JP] ET AL) 11 January 2018 (2018-01-11) | 1-4, 11-13 | G06F |
| A | * paragraph [0003] - paragraph [0052]; figures 2-7 * | 5-10 | |
| A | PETER E HART ET AL: "A Formal Basis for the Heuristic Determination of Minimum Cost Paths", IEEE TRANSACTIONS ON SYSTEMS SCIENCE AND CYBERNETICS, IEEE, US, vol. 1, no. 2, 1 July 1968 (1968-07-01), pages 100-107, XP011163309, ISSN: 0536-1567 * the whole document * | 5,6 | |

-/--

The present search report has been drawn up for all claims

| Place of search | Date of completion of the search | Examiner |
|---|---|---|
| Munich | 21 October 2024 | Lindner, Anja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 19 2108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | NASH, ALEXSVEN KOENIGCRAIG TOVEY: "Lazy Theta*: Any-angle path planning and path length analysis in 3D", PROCEEDINGS OF THE AAAI CONFERENCE ON ARTIFICIAL INTELLIGENCE, vol. 24, no. 1, 2010, XP093216435, * the whole document * | 6-8 | |
| A | MICHAEL SCHWARZ ET AL: "Fast parallel surface and solid voxelization on GPUs", ACM TRANSACTIONS ON GRAPHICS, ACM, NY, US, vol. 29, no. 6, 15 December 2010 (2010-12-15), pages 1-10, XP058167644, ISSN: 0730-0301, DOI: 10.1145/1882261.1866201 * the whole document * | 4 | |

**TECHNICAL FIELDS SEARCHED (IPC)**

The present search report has been drawn up for all claims

| Place of search | Date of completion of the search | Examiner |
|---|---|---|
| Munich | 21 October 2024 | Lindner, Anja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 2108

This annex lists the patent family members relating to the patent documents cited in  the above-mentioned European search report.
The members are as contained in the European Patent Office EDP file on
The European Patent Office is in no way liable for these particulars which are merely given for the purpose of information.

21-10-2024

| Patent document cited in search report | Publication date | Patent family member(s) | | Publication date |
|---|---|---|---|---|
| US 2018012396 A1 | 11-01-2018 | CN | 107590300 A | 16-01-2018 |
| | | EP | 3267342 A1 | 10-01-2018 |
| | | JP | 6753180 B2 | 09-09-2020 |
| | | JP | 2018005861 A | 11-01-2018 |
| | | KR | 20180006304 A | 17-01-2018 |
| | | US | 2018012396 A1 | 11-01-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Communications of the ACM*, 1979, vol. 22 (10), 560-570

- **NASH, ALEX** ; **SVEN KOENIG** ; **CRAIG TOVEY**. Lazy Theta*: Any-angle path planning and path length analysis in 3D. *Proceedings of the AAAI Conference on Artificial Intelligence*, 2010, vol. 24 (1)